# EUROPÄISCHE PATENTSCHRIFT

(11) **EP 2 223 033 B1**
(45) Veröffentlichungstag und Bekanntmachung des Hinweises auf die Patenterteilung: **06.11.2013**
(21) Anmeldenummer: 08866398.4
(22) Anmeldetag: 19.12.2008
(51) Int. Cl.: F27B 15/12, B01D 45/16, B01J 8/00

(54) **VERFAHREN UND VORRICHTUNG ZUR GROBABSCHEIDUNG VON FESTSTOFFPARTIKELN AUS FESTSTOFFBELADENEN GASEN**
METHOD AND DEVICE FOR COARSE SEPARATION OF SOLID PARTICLES FROM SOLID-LADEN GASES
PROCÉDÉ ET DISPOSITIF DE SÉPARATION GROSSIÈRE DE PARTICULES DE MATIÈRES SOLIDES DANS DES GAZ CHARGÉS EN MATIÈRES SOLIDES

(30) Priorität: 21.12.2007 AT 21012007
(43) Veröffentlichungstag der Anmeldung: 01.09.2010
(73) Patentinhaber: Siemens VAI Metals Technologies GmbH, 4031 Linz (AT)
(72) Erfinder: AICHINGER, Georg, A-4481 Asten (AT); BAUERNFEIND, Harald, A-4020 Linz (AT); WURM, Johann, A-4283 Bad Zell (AT)
(74) Vertreter: Maier, Daniel Oliver
(86) Internationale Anmeldenummer: PCT/EP2008/010924
(87) Internationale Veröffentlichungsnummer: WO 2009/083186

(56) Entgegenhaltungen:
- EP-A- 0 130 668
- DE-A1- 10 123 297
- JP-A- 2003 240 209

## Beschreibung

Die Erfindung betrifft ein Verfahren und eine Vorrichtung zur Grobabscheidung von Feststoffpartikeln aus feststoffbeladenen Gasen. Die Erfindung betrifft weiters ein Verfahren zum Behandeln von partikelförmigen Einsatzstoffen mittels Behandlungsgasen in einem Reaktor, insbesondere in einer Fluidisierungszone bei erhöhter Temperatur.

Aus der EP 1 397 521 ist es bekannt, dass aus einem Reaktor zur Behandlung von teilchenförmigem Material ausgetragene, feststoffbeladene Behandlungsgase einer Abtrenneinrichtung, wie z.B. einem Zyklon zugeführt werden. Aufgrund des Prozesses in einer Fluidisierungszone, wie z.B. in einer Wirbelschicht, werden Feststoffe mit dem Behandlungsgas ausgetragen. Im Zyklon erfolgt die Abtrennung dieses Feststoffes vom Behandlungsgas, wobei der Feststoff wieder in den Reaktor zurückgeführt wird. Nachteilig ist dabei, dass große Partikel bei der Rückführung der Feststoffe in den Reaktor zu verstopften Eintragsvorrichtungen führen können.

Es ist daher eine Aufgabe der Erfindung ein Verfahren und eine Vorrichtung zur Verfügung zu stellen, die eine sichere Abtrennung von Feststoffen aus einem feststoffbeladenen Gas ermöglichen und die genannten Nachteile aus dem Stand der Technik vermeiden.

Die erfindungsgemäße Aufgabe wird entsprechend der erfindungsgemäßen Vorrichtung zur Grobabscheidung nach dem kennzeichnenden Teil des Anspruchs 1 und dem Verfahren zur Grobabscheidung nach dem kennzeichnenden Teil des Anspruchs 10 gelöst.

Mit der erfindungsgemäßen Vorrichtung können Feststoffe aus einem feststoffbeladenen Gas abgetrennt werden. Feststoffe treten häufig mit Behandlungsgasen aus Reaktoren aus, die zur Reduktion eines partikelförmigen Materials genutzt werden. Insbesondere beim Betrieb einer Fluidisierungszone ist es bekannt, dass Feststoffe zusammen mit dem Behandlungsgas ausgetragen werden. Diese Feststoffe müssen vom Behandlungsgas abgetrennt werden und können dem Reaktor erneut zugeführt werden. Aufgrund der Fluidisierungszone kann es zu sehr starken Austragungen kommen, wobei auch größere Feststoffpartikel mitgerissen werden. Durch die erfindungsgemäße Vorrichtung werden die aus einem Reaktor ausgetragenen bzw. ausgeschleuderten Feststoffpartikel in den sacklochartigen Leitungsfortsatz getragen, während das Gas in die bogenförmige Ableitung strömt. Damit wird vermieden, dass die groben Feststoffpartikel mit dem Gas abströmen. Sie verbleiben in der im Wesentlichen senkrecht oder schräg angeordneten Zuleitung, sodass eine Grobabscheidung unmittelbar erfolgt. Vorteilhaft ist dabei, dass die Vorrichtung ohne bewegliche Teile auskommt und dass Feststoffpartikel sicher in der Zuleitung verbleiben. Durch die erfindungsgemäße Vorrichtung kann der Austrag von Feststoffpartikeln, insbesondere von groben Partikeln weitgehend vermieden werden, sodass bei einer weiteren Behandlung des feststoffbeladenen Gases keine Probleme durch Feststoffpartikel auftreten.

Nach einer bevorzugten Ausführungsform wird die Position der zumindest abschnittsweise bogenförmigen Ableitung auf der Zuleitung derart gewählt, dass die Länge des Leitungsfortsatzes in etwa der Höhe der bogenförmigen Ableitung entspricht. Durch die Anpassung der Länge des Leitungsfortsatzes kann der Raum, in den die Feststoffpartikel gelangen gemäß den Betriebsparametern wie z.B. Betriebsdrücken angepasst werden. Entsprechend der Strömungsgeschwindigkeit und den Volumenstrom des feststoffbeladenen Gases wird die Länge des Leitungsfortsatzes festgelegt. Da durch die bogenförmige Ableitung der Strömungswiderstand beeinflusst wird, hat es sich als vorteilhafte Lösung gezeigt, wenn die Länge des Leistungsfortsatzes in etwa der Höhe der Ableitung entspricht.

Nach einer weiteren bevorzugten Ausführungsform entspricht die Länge des Leitungsfortsatzes in etwa 0,3 - 3 mal, insbesondere 0,5 - 1 mal, der lichten Weite der Zuleitung. Durch die Kombination aus lichter Weite und Länge kann entsprechend der Größe der Feststoffpartikel eine weitgehende Grobabscheidung erzielt werden. Dabei wird die Trägheit der Feststoffpartikel genutzt.

Erfindungsgemäß weist die Krümmung der bogenförmigen Ableitung, in Form eines Kreisbogens oder eines aus geraden Segmenten aufgebauten Bogens, einen Radius von etwa 3 - 5 mal der lichten Weite der bogenförmigen Ableitung auf. Diese Ausführungsform hat sich hinsichtlich der Strömungseigenschaften und dem durch die Umlenkung verbundenen Druckabfall als vorteilhaft gezeigt. Alternativ ist es möglich die Bogenform durch eine Mehrzahl von Segmenten aufzubauen. Dies ist eine kostengünstige Alternative zur Kreisbogenform.

Gemäß einer speziellen Ausgestaltung der erfindungsgemäßen Vorrichtung sind die lichten Weiten der Zuleitung und der bogenförmigen Ableitung in etwa gleich. Damit ist der innere Strömungsquerschnitt in etwa konstant, sodass auch der Druckabfall in der Vorrichtung gering gehalten werden kann. Dies ist auch im Hinblick auf nachfolgende Aggregate zur Behandlung des feststoffbeladenen Gases vorteilhaft.

Nach einer vorteilhaften Ausgestaltung der efindungsgemäßen Vorrichtung sind die Querschnitte der Zuleitung und/ oder der bogenförmigen Ableitung kreisförmig, wobei diese im Bereich der Einmündung des sacklochartigen Fortsatzes in den Bogen ebene Wandabschnitte aufweisen, die zur Verstärkung Rippen umfassen. Durch den kreisförmigen Querschnitt wird ein vorteilhaft geringer Strömungswiderstand erreicht in der Vorrichtung erzielt. Im Bereich des Bogens entstehen durch den sacklochartigen Leitungsfortsatz zwei ebene Wandabschnitte. Diese ebenen Wandabschnitte werden bei Ausgestaltung der druckbeaufschlagten Leitung durch die Anordnung von Rippen verstärkt.

Eine weitere mögliche Ausgestaltung der erfindungsgemäßen Vorrichtung sieht vor, dass der Deckel des sacklochartigen Leitungsfortsatzes eine ebene innere Oberfläche aufweist, die horizontal und/ oder normal zur Achse der Zuleitung angeordnet ist, oder eine gewölbte Oberfläche aufweist, die einem Klöpperboden oder einer Kugelkalotte oder ähnlichem entspricht. Unter Klöpperboden ist eine Kuppelform zu verstehen, die eine kleinere randnahen Krümmung und eine größere mittige Krümmung aufweist.

Die Zuleitung kann entweder senkrecht oder schräg angeordnet sein bzw. auch S-förmig ausgebildet sein, um die Umlenkung zu verstärken.

Feststoffteilchen werden aus Reaktoren, die eine Fluidisierungszone aufweisen häufig mit sehr hohen Geschwindigkeiten zusammen mit dem Behandlungsgas aus dem Reaktor ausgetragen bzw. auch ausgeschleudert. Damit treffen diese Feststoffteilchen mit teilweise hoher Geschwindigkeit auf den Deckel im Leitungsfortsatz und werden von diesem reflektiert, sodass die Feststoffteilchen über die Zuleitung aufgrund der Schwerkraft wieder in den Reaktor gelangen. Aufgrund der Charakteristik vieler Reaktoren mit Fluidisierungszone werden Feststoffteilchen nicht andauernd, sondern nur unter bestimmten Drucksituationen ausgeschleudert. Somit ist sichergestellt, dass ausgetragene Feststoffteilchen nur in die Zuleitung und in den Leitungsfortsatz gelangen bzw. wieder in den Reaktor zurückfallen. Dazu ist es üblich die erfindungsgemäße Vorrichtung über einem Reaktor anzuordnen.

Erfindungsgemäß ist in der Ableitung, zur Kühlung des vorgereinigten Gases ein Anschluss zur Einleitung eines Kühlgasstroms in das vorgereinigte Gas vorgesehen. Dies gestattet einerseits die Einstellung einer gezielten Temperatur im Gas nach der Vorrichtung und damit eine Vorbereitung für die weitere Behandlung des feststoffbeladenen Gases.

Nach einer speziellen Ausgestaltung der erfindungsgemäßen Vorrichtung ist in der Zuleitung im Bereich der bogenförmigen Ableitung eine verschließbare Öffnung zur Innenreinigung, insbesondere zur Beseitigung von Ablagerungen, vorgesehen. Beim Einsatz der Vorrichtung unter heißem feststoffbeladenen Gas kann es zu Ablagerungen bzw. Anbackungen kommen. Durch die Öffnung ist eine Innenreinigung bzw. eine Beseitigung derartiger Anbackungen einfach möglich, des weiteren können so Überprüfungen der Vorrichtung durchgeführt werden.

Das erfindungsgemäße Verfahren zur Grobabscheidung von Feststoffpartikeln aus feststoffbeladenen Gasen zeichnet sich durch ein einfaches Konzept aus. Über eine Zuleitung der erfindungsgemäßen Vorrichtung werden an einer Stirnseite feststoffbeladene Gase zugeführt. Die Zuleitung ist ihrer anderen Stirnseite mittels eines Deckels verschlossen. Eine bogenförmige Ableitung auf der Zuleitung ist derart angeordnet, dass ein sacklochartiger Leitungsfortsatz zur Aufnahme von Feststoffpartikeln gebildet wird, wobei in die Zuleitung eingetragene Feststoffe aufgrund ihrer Trägheit in den Leitungsfortsatz getragen und dabei zumindest teilweise vom Gas abgeschieden werden. Das Gas wird mit verbliebenen Feststoffen über die Ableitung abgeführt. Damit können nur sehr feine Feststoffpartikel mit dem Gas in die bogenförmige Ableitung gelangen, sodass der Großteil der Feststoffe in der Zuleitung verbleibt. Vor allem aber wird durch das Verfahren erreicht, dass grobe Feststoffpartikel nicht mit dem Gas in die Ableitung gelangen. Dies ist ein wesentlicher Vorteil, da bei nachfolgenden Behandlungsschritten des Gases Feststoffpartikel vor allem mit Korngrößen von mehr als 5 - 10 mm erhebliche Probleme bereiten können. Vorteilhaft ist dabei, dass durch Ausnützung der Trägheit die Feststoffpartikel abgeschieden werden, sodass keinerlei Umlenkungen oder aufwändige Verfahrensschritte nötig sind.

Nach einer besonders vorteilhaften Ausgestaltung des erfindungsgemäßen Verfahrens werden die im Leitungsfortsatz abgeschiedenen Feststoffe aufgrund von Schwerkraft über die Zuleitung wieder ausgetragen. Diese einfachste Lösung bewirkt nicht nur einen sicheren Abtransport der abgeschiedenen Feststoffpartikel sondern macht auch entsprechende Vorrichtungen zum Abtransport unnötig.

Eine mögliche Ausgestaltung des erfindungsgemäßen Verfahrens sieht vor, dass während des Austrages der abgeschiedenen Feststoffe über die Zuleitung die Sinkgeschwindigkeit der Feststoffe im Leitungsfortsatz größer als die Gasgeschwindigkeit des feststoffbeladenen Gases in der Zuleitung ist. Während also die Sinkgeschwindigkeit der Feststoffe größer als die Gasgeschwindigkeit ist, können die Feststoffpartikel durch die Zuleitung ausgetragen werden.

Eine weitere Ausgestaltung des erfindungsgemäßen Verfahrens sieht vor, dass abgeschiedene Feststoffe am Deckel des Leitungsfortsatzes reflektiert und zurück in die Zuleitung geschleudert werden. Bei hohen Gas- bzw. Feststoffpartikelgeschwindigkeiten treffen die Partikel mit hoher Geschwindigkeit auf den Deckel und fallen dann wieder zurück in die Zuleitung.

Entsprechend einer Ausgestaltung des erfindungsgemäßen Verfahrens wird dem vorgereinigten Gas zur Kühlung ein Kühlgasstrom beigemengt. Nach erfolgter Grobabscheidung kann das vorgereinigte Gas für weitere Behandlungen thermisch eingestellt werden. Dies erfolgt durch zumischen eines Kühlgasstromes, sodass z.B. sehr heiße Gase gekühlt werden können.

Nach einer vorteilhaften Ausgestaltung des erfindungsgemäßen Verfahrens werden im vorgereinigten Gas verbliebene Feststoffe in einer weiteren Abscheideeinrichtung abgetrennt. Aufgrund der bereits vorher erfolgten Grobabscheidung und gegebenenfalls einer Verringerung der Gastemperatur kann das Gas für nachfolgende Abscheideeinrichtungen optimal vorbereitet werden, sodass die Abscheideeinrichtung einen möglichst hohen Wirkungsgrad und einen störungsfreien Betrieb erzielt. Insbesondere beim Einsatz von Zyklonabscheidern ist es nötig die Temperatur bei heißen Gasen entsprechend zu senken und eine bestimmte Strömungsgeschwindigkeit einzuhalten. Durch die vorab durchgeführte Grobabscheidung werden dabei grobe Feststoffpartikel sicher abgetrennt und eine hinreichend hohe Strömungsgeschwindigkeit beibehalten, sodass eine optimale Abscheidung in einem Zyklon oder anderen Abscheideeinrichtungen erreicht wird.

Die erfindungsgemäße Aufgabe wird weiters entsprechend dem erfindungsgemäßen Verfahren zum Behandeln von partikelförmigen Einsatzstoffen nach dem kennzeichnenden Teil des Anspruchs 16 gelöst.

Das erfindungsgemäße Verfahren zum Behandeln von partikelförmigen Einsatzstoffen, insbesondere von Feinerzen, erfolgt mittels Behandlungsgasen in einem Reaktor, insbesondere in einer Fluidisierungszone, und bei erhöhter Temperatur. Das feststoffbeladene Behandlungsgas wird durch Reaktionen im Reaktor, die auch eruptionsartige Abläufe haben können, aus dem Reaktor ausgetragen und einer Vorrichtung gemäß einem der Ansprüche 1 bis 8 zugeführt.

Beim Betrieb von Fluidisierungszonen ist es bekannt, dass es immer wieder zu Druckspitzen im Reaktor kommt, die dazu führen können, dass nicht nur Stäube und kleine Feststoffpartikel aus dem Reaktor ausgeschleudert werden, sondern auch größere Partikel, die eine Partikelgröße von mehr als 5 - 10 mm aufweisen. Derartige Partikel stellen potentielle Störursachen dar, weil es zu Anbackungen, Ablagerungen aber auch zu einer Verminderung von Strömungsquerschnitten bis hin zu Verstopfungen kommen kann. Das erfindungsgemäße Verfahren vermeidet diese Problemkreise.

Die feststoffbeladenen Behandlungsgase werden über die Zuleitung zugeführt, wobei in die Zuleitung eingetragene Feststoffe aufgrund ihrer Trägheit in den Leitungsfortsatz getragen und zumindest teilweise vom Behandlungsgas abgeschieden werden. Das vorgereinigte Behandlungsgas wird über die Ableitung abgeführt. Die im Leitungsfortsatz abgeschiedenen Feststoffe werden aufgrund von Schwerkraft über die Zuleitung wieder in den Reaktor geführt. Damit ist sichergestellt, dass die Verluste durch ausgeschleuderte Feststoffpartikel, wie z.B. Feinerzen oder auch Feineisenerzen gering gehalten werden können.

Nach einer besonders vorteilhaften Ausgestaltung des erfindungsgemäßen Verfahrens werden im vorgereinigten Behandlungsgas verbliebene Feststoffe in einer weiteren Abscheideeinrichtung abgetrennt, wobei diese Feststoffe über einen Injektor in den Reaktor rückgeführt werden. Damit ist es möglich, nahezu die gesamten mit dem Behandlungsgas ausgetragenen Feststoffpartikel in den Reaktor und damit in den Prozess zurückzuführen. Verluste von Wertstoffen, wie z.B. Erz können damit sehr gering gehalten werden.

Nach einer weitern besonders vorteilhaften Ausgestaltung des erfindungsgemäßen Verfahrens ist das Verfahren ein Reduktionsverfahren. Bei Reduktionsverfahren kann es durch mit dem Behandlungsgas ausgetragenem teilweise bzw. weitgehend reduziertem Material, wie z.B. Erzen oder auch Eisenerz, zu erheblichen Verlusten kommen, da der Wertstoff reduziertes Material wieder aufwändig behandelt und erneut eingebracht werden muss. Durch das Verfahren kann dies weitgehend vermieden werden.

Die Erfindung wird am Bespiel einer möglichen Ausgestaltung näher beschrieben.
Fig. 1: Erfindungsgemäße Vorrichtung zur Grobabscheidung in einer möglichen Ausgestaltung
Fig. 2: Anordnung der erfindungsgemäßen Vorrichtung über einem Reaktor zur thermisch-metallurgischen Behandlung eines Materials
Fig. 3: Anordnung der erfindungsgemäßen Vorrichtung über einem Reaktor zur thermisch-metallurgischen Behandlung eines Materials mit einer schräg angeordneten Zuleitung

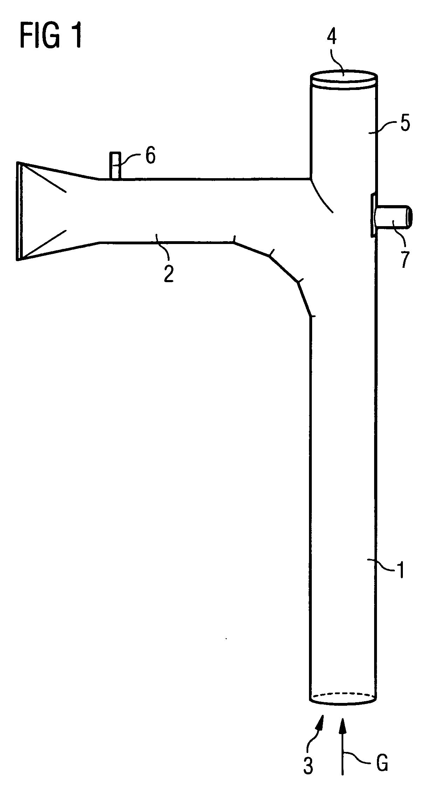

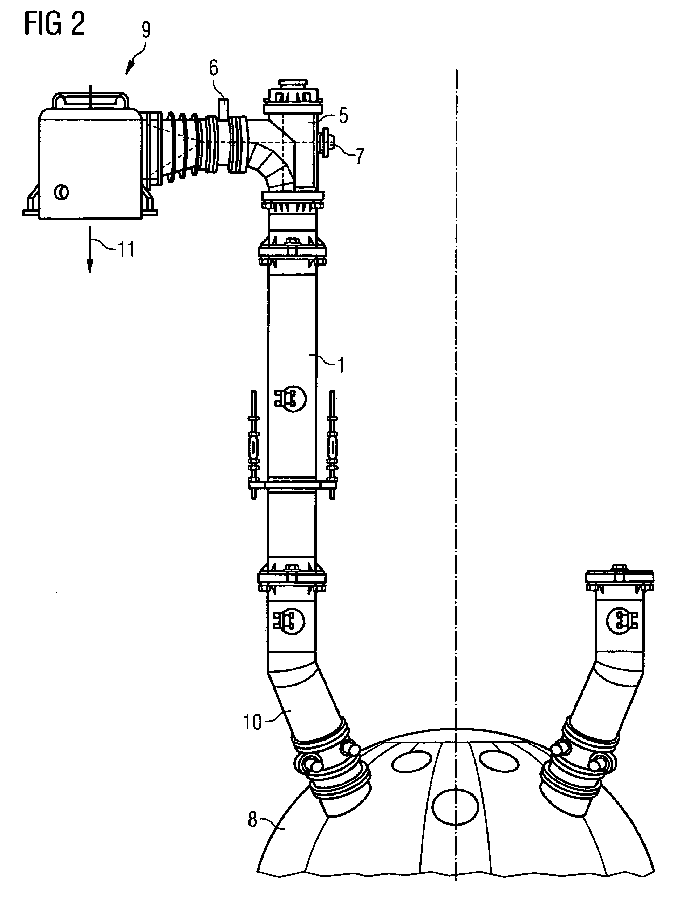

Figur 1 zeigt eine im Wesentlichen senkrecht angeordnete Zuleitung 1, welche leitungsmäßig mit einem Erzeuger feststoffbeladener Gase verbunden ist. Eine übliche Anordnung sieht die Vorrichtung mit der Zuleitung 1 über einem solchen Erzeuger (Reaktor 8, siehe Fig. 2) angeordnet vor. In einer Vielzahl von metallurgischen Verfahren, wie z.B. Reduktionsverfahren oder auch anderen metallurgisch-thermischen Verfahren treten Feinstoffpartikel mit Prozessgasen des Verfahrens (Behandlungsgasen) auf. Diese werden bei kleiner Partikelgröße mit Gasströmen mitgerissen, insbesondere bei hohen Gasgeschwindigkeiten, wie sie oftmals auftreten. Beispielsweise ist es bekannt, dass bei Wirbelschichtverfahren, die auf einer Fluidisierungszone basieren, es immer wieder zu eruptionsartigen und mit hohen Gasgeschwindigkeiten gekoppelten Bewegungen in der Fluidisierungszone kommt. Diese führen über die Leitungen zum Austrag des Behandlungsgases, sodass feststoffbeladene Gase G entstehen, deren weitere Behandlung aufwendig und kostenintensiv ist. Im Falle des Austrages von Feststoffen aus einem Reaktor mit einer Fluidisierungszone tritt das feststoffbeladene Gas G über die Zuleitung 1 in die erfindungsgemäße Vorrichtung ein. Dabei werden die Feststoffpartikel in den sacklochartigen Raum, gebildet durch den Leitungsfortsatz 5 geschleudert. Aufgrund der Trägheit der Feststoffpartikel verbleibt der überwiegende Teil der Feststoffpartikel im Leitungsfortsatz 5 und gelangt nicht in die bogenförmige Ableitung 2.

Die im Leitungsfortsatz verbliebenen Feststoffpartikel gelangen unter Schwerkraft über die Zuleitung wieder zurück in den Reaktor, aus dem sie ausgeschleudert wurden. Somit sind keinerlei Einrichtungen für den Austrag der abgeschiedenen Feststoffpartikel aus der Vorrichtung nötig.

Die Ableitung 2 ist im Bereich der Einmündung in die Zuleitung 1 bogenförmig ausgebildet, um eine ungehinderte Gasströmung zu ermöglichen. Die bogenförmige Ableitung 2 kann an ihrem freien Ende beliebig ausgebildet sein, um einen Anschluss an weitere Behandlungseinrichtungen zu ermöglichen.

Gemäß Figur 2 kann die bogenförmige Ableitung mit einer weiteren Abscheideeinrichtung, wie z.B. einen Zyklon 9, verbunden sein. Damit wird eine zumindest zweistufige Abscheidung erzielt, mit einer Grobabscheidung und einer nachfolgenden Feinabscheidung und ggf. einer Rückführung, der in der zweiten Stufe abgeschiedenen Feststoffpartikel in den Reaktor. Üblicherweise wird dem bereits in der Vorabscheidung vorgereinigten Gas ein Kühlgas über einen Anschluss 6 eingeleitet, wobei die Temperatur des Gases entsprechend angepasst, zumeist gekühlt wird. Wie in Fig. 2 angedeutet kann eine Mehrzahl der erfindungsgemäßen Vorrichtungen in Verbindung mit einem Reaktor 8 angeordnet werden.

Vorteilhafterweise weist die Zuleitung 1 im Bereich der bogenförmigen Ableitung 2 eine verschließbare Öffnung 7 auf. Diese gestattet einen Zugang zum Inneren der Vorrichtung und ermöglicht eine Innenreinigung. Bei einer Vielzahl von feststoffbeladenen Gasen treten Ablagerungen oder Anbackungen in Vorrichtungen auf, in denen das Gas geführt wird. Durch die Öffnung 7 ist eine einfache Beseitigung von Ablagerungen bzw. die Inspektion der Vorrichtung möglich.

Die Anzahl der Vorrichtungen zur Grobabscheidung je Erzeuger feststoffbeladener Gase wird nach Bedarf festgelegt. Technisch übliche Reaktoren können mit 4 bis 8 Vorrichtungen zur Grobabscheidung ausgestattet sein. Figur 2 zeigt eine schräge Leitungsanbindung 10 an einen Reaktor 8 mit einer senkrechten Zuleitung 1 und einem senkrechtem sacklochartigen Fortsatz 5. Der Fortsatz 5 kann aber auch in axialer Verlängerung der Leitungsanbindung 10 verlaufen.

Die im Zyklon 9 abgeschiedenen Feststoffpartikel 11 können über einen nicht dargestellten Injektor in den Reaktor rückgeführt werden.

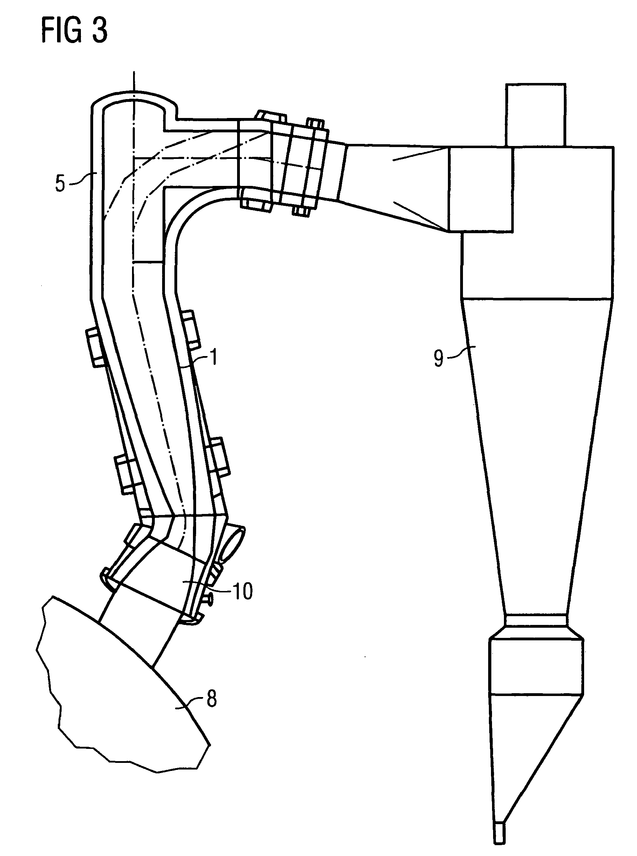

Nach Fig. 3 ist die Zuleitung 1 schräg angeordnet, sodass sich eine S-förmige Leitung vom Reaktor in die Vorrichtung ergibt, sodass die Umlenkung noch verstärkt werden kann.

## Patentansprüche

1. Vorrichtung zur Grobabscheidung von Feststoffpartikeln aus feststoffbeladenen Gasen aus einem Reaktor zur Behandlung von partikelförmigen Einsatzstoffen mittels Behandlungsgasen, mit einer senkrecht oder schräg angeordneten Zuleitung (1) und einer zumindest abschnittsweise bogenförmigen Ableitung (2), verbindbar mit einer Abtrenneinrichtung zur Abscheidung verbliebener Feststoffe aus dem vorgereinigten Gas, **dadurch gekennzeichnet, dass** über die Zuleitung an einer unteren Stirnseite (3) feststoffbeladene Gase (G) zuführbar sind und die Zuleitung an ihrer oberen Stirnseite mittels eines Deckels (4) verschlossen ist, wobei die bogenförmige Ableitung (2) auf der Zuleitung (1) angeordnet ist, sodass ein sacklochartiger Leitungsfortsatz (5) zur Abscheidung von Feststoffpartikeln gebildet wird, wobei die Krümmung der bogenförmigen Ableitung (2), in Form eines Kreisbogens oder eines aus geraden Segmenten aufgebauten Bogens, einen Radius von 3 - 5 mal der lichten Weite der bogenförmigen Ableitung (2) aufweist.

2. Vorrichtung nach Anspruch 1, **dadurch gekennzeichnet, dass** die Position der bogenförmigen Ableitung (2) auf der Zuleitung (1) derart gewählt wird, dass die Länge des Leitungsfortsatzes (5) der Höhe der bogenförmigen Ableitung (2) entspricht.

3. Vorrichtung nach Anspruch 1 oder 2, **dadurch gekennzeichnet, dass** die Länge des Leitungsfortsatzes (5) 0,3 - 3 mal, insbesondere 0,5 - 1 mal, der lichten Weite der Zuleitung (1) entspricht.

4. Vorrichtung nach einem der Ansprüche 1 - 3, **dadurch gekennzeichnet, dass** die lichten Weiten der Zuleitung (1) und der bogenförmigen Ableitung (2) gleich sind.

5. Vorrichtung nach einem der Ansprüche 1 - 4, **dadurch gekennzeichnet, dass** die Querschnitte der Zuleitung (1) und/ oder der bogenförmigen Ableitung (2) kreisförmig sind/ ist, wobei diese im Bereich der Einmündung des sacklochartigen Fortsatzes in den Bogen, ebene Wandabschnitte aufweisen, die zur Verstärkung Rippen umfassen.

6. Vorrichtung nach einem der Ansprüche 1 - 5, **dadurch gekennzeichnet, dass** der Deckel (4) des sacklochartigen Leitungsfortsatzes (5) eine ebene innere Oberfläche aufweist, die horizontal und/ oder normal zur Achse der Zuleitung (1) angeordnet ist, oder eine gewölbte Oberfläche aufweist, die einem Klöpperboden oder einer Kugelkalotte oder ähnlichem entspricht.

7. Vorrichtung nach einem der Ansprüche 1 - 6, **dadurch gekennzeichnet, dass** in der Ableitung zur Kühlung des vorgereinigten Gases ein Anschluss (6) zur Einleitung eines Kühlgasstroms in das vorgereinigte Gas vorgesehen ist.

8. Vorrichtung nach einem der Ansprüche 1 - 7, **dadurch gekennzeichnet, dass** in der Zuleitung im Bereich der bogenförmigen Ableitung eine verschließbare Öffnung (7) zur Innenreinigung, insbesondere zur Beseitigung von Ablagerungen, vorgesehen ist.

9. Verfahren zur Grobabscheidung von Feststoffpartikeln aus feststoffbeladenen Gasen aus einem Reaktor (8) zur Behandlung von partikelförmigen Einsatzstoffen mittels Behandlungsgasen in einer Vorrichtung gemäß einem der Ansprüche 1 bis 9, **dadurch gekennzeichnet, dass** über die Zuleitung (1) an einer Stirnseite (3) feststoffbeladene Gase zugeführt werden und die Zuleitung (1) an ihrer anderen Stirnseite mittels eines Deckels (4) verschlossen ist, wobei die bogenförmige Ableitung (2) auf der Zuleitung (1) angeordnet ist, sodass ein sacklochartiger Leitungsfortsatz (5) zur Abscheidung von Feststoffpartikeln gebildet wird, wobei in die Zuleitung (1) eingetragene Feststoffe aufgrund ihrer Trägheit in den Leitungsfortsatz (5) getragen und dabei zumindest teilweise vom Gas abgeschieden werden und das Gas mit verbliebenen Feststoffen über die Ableitung (2) abgeführt wird, wobei abgeschiedene Feststoffe am Deckel (4) des Leitungsfortsatzes (5) reflektiert und zurück in die Zuleitung (1) geschleudert werden.

10. Verfahren nach Anspruch 9, **dadurch gekennzeichnet, dass** die im Leitungsfortsatz (5) abgeschiedenen Feststoffe aufgrund von Schwerkraft über die Zuleitung (1) wieder ausgetragen werden.

11. Verfahren nach Anspruch 10, **dadurch gekennzeichnet, dass** während des Austrages der abgeschiedenen Feststoffe über die Zuleitung (1) die Sinkgeschwindigkeit der Feststoffe im Leitungsfortsatz (5) größer als die Gasgeschwindigkeit des feststoffbeladenen Gases in der Zuleitung (1) ist.

12. Verfahren nach einem der Ansprüche 10 bis 11, **dadurch gekennzeichnet, dass** dem vorgereinigten Gas zur Kühlung ein Kühlgasstrom beigemengt wird.

13. Verfahren nach einem der Ansprüche 10 bis 12, **dadurch gekennzeichnet, dass** im vorgereinigten Gas verbliebene Feststoffe in einer weiteren Abscheideeinrichtung abgetrennt werden.

14. Verfahren nach einem der Ansprüche 10 bis 13, **dadurch gekennzeichnet, dass** die im Reaktor behandelten partikelförmigen Einsatzstoffe Feinerze sind.

15. Verfahren nach einem der Ansprüche 10 bis 14, **dadurch gekennzeichnet, dass** die partikelförmigen Einsatzstoffe in einer Fluidisierungszone behandelt werden.

16. Verfahren nach einem der Ansprüche 10 bis 15, **dadurch gekennzeichnet, dass** die feststoffbeladenen Behandlungsgase über die Zuleitung (1) zugeführt werden, in die Zuleitung (1) eingetragene Feststoffe aufgrund ihrer Trägheit in den Leitungsfortsatz (5) getragen und zumindest teilweise vom Behandlungsgas abgeschieden werden, wobei das vorgereinigte Behandlungsgas über die Ableitung (2) abgeführt und die im Leitungsfortsatz (5) abgeschiedenen Feststoffe aufgrund von Schwerkraft über die Zuleitung (1) wieder in den Reaktor (8) geführt werden

17. Verfahren nach einem der Ansprüche 10 bis 16, **dadurch gekennzeichnet, dass** die im vorgereinigten Behandlungsgas verbliebenen Feststoffe in einer weiteren Abscheideeinrichtung abgetrennt werden, wobei diese Feststoffe über einen Injektor in den Reaktor (8) rückgeführt werden.

18. Verfahren nach einem der Ansprüche 10 bis 17, **dadurch gekennzeichnet, dass** die Behandlung der Einsatzstoffe mittels Behandlungsgasen ein Reduktionsverfahren ist.

## Claims

1. Device for the coarse separation of solid particles from solids-laden gases from a reactor for treatment of particulate feed materials by means of treatment gases, the device having a vertically upwardly extending or obliquely upwardly extending feed line (1) and an at least partially arcuate drain line (2) which is able to be connected to a separating means for the separation of remaining solids from the pre-purified gas, **characterised in that** solids-laden gases (G) are able to be supplied via a lower end side (3) of the feed line (1) and the feed line is closed on its upper end side by means of a lid (4), wherein the arcuate drain line (2) is arranged on the feed line (1) such that a blind hole-type line projection (5) is formed for separating solid particles, wherein the curvature of the arcuate drain line (2) is in the form of an arc of a circle or an arc constructed from straight segments, having a radius of 3 - 5 times a clear width of the arcuate drain line (2).

2. Device according to claim 1, **characterised in that** the position of the arcuate drain line (2) along the feed line (1) is selected such that the length of the line projection (5) corresponds to the height of the arcuate drain line (2).

3. Device according to claim 1 or 2, **characterised in that** the length of the line projection (5) corresponds to 0.3 - 3 times, in particular 0.5 - 1 times, the clear width of the feed line (1).

4. Device according to one of the claims 1 to 3, **characterised in that** the clear widths of the feed line (1) and the arcuate drain line (2) are the same.

5. Device according to one of the claims 1 - 4, **characterised in that** the cross-sections of the feed line (1) and/or the arcuate drain line (2) is/are circular, said lines having, in the region in which the blind hole-type projection opens into the arc, flat wall portions comprising ribs for reinforcement.

6. Device according to one of the claims 1 - 5, **characterised in that** the lid (4) of the blind hole-type line projection (5) has a flat inner surface arranged horizontally and/or normally to an axis of the feed line (1), or has an arched surface corresponding to a dished bottom or a spherical cap or the like.

7. Device according to one of the claims 1 - 6, **characterised in that** a connection (6) is provided in the drain line for introducing a cooling gas flow into the pre-purified gas for cooling the pre-purified gas.

8. Device according to one of the claims 1 - 7, **characterised in that** a closable opening (7) is provided in the feed line, in a region of the arcuate drain line, for enabling internal cleaning, in particular for removing deposits.

9. Method for the coarse separation of solid particles from solids-laden gases from a reactor (8) for the treatment of particulate feed materials by means of treatment gases in a device according to one of the claims 1 - 9, **characterised in that** solids-laden gases are supplied via an end side (3) of the feed line (1) and the feed line (1) is closed at its other end side by means of a lid (4), wherein the arcuate drain line (2) is arranged on the feed line (1) in order to form a blind hole-type line projection (5) for separating solid particles, wherein solids introduced into the feed line (1) are carried into the line projection (5) owing to inertia of the solids, and are at least partly separated from the gas, and the gas with remaining solids is drawn off via the drain line (2) wherein separated solids on the lid (4) of the line projection (5) are reflected and casted back into the feed line (1).

10. Method according to claim 9, **characterised in that** the solids separated in the line projection (5) are discharged again owing to gravity, via the feed line (1).

11. Method according to claim 10, **characterised in that** during the discharge of the separated solids via the feed line (1), the velocity of fall of the solids in the line projection (5) is greater than the gas velocity of the solids-laden gas in the feed line (1).

12. Method according to one of the claims 10 to 11, **characterised in that** a cooling gas flow is added to the pre-purified gas for cooling.

13. Method according to one of the claims 10 to 12, **characterised in that** solids remaining in the pre-purified gas are separated in a further separating means.

14. Method according to one of the claims 10 to 13, **characterised in that** the particulate feed materials treated in the reactor are fine ores.

15. Method according to one of the claims 10 to 14, **characterised in that** the particulate feed materials are treated in a fluidisation zone.

16. Method according to one of the claims 10 to 15, **characterised in that** the solids-laden treatment gases are supplied via the feed line (1) such that solids introduced into the feed line (1) are carried, owing to their inertia, into the feed line projection (5) and are at least partly separated from the treatment gas, wherein the pre-purified treatment gas is drawn off via the drain line (2) and the solids separated in the line projection (5) are returned to the reactor (8) via the feed line (1) owing to gravity.

17. Method according to one of the claims 10 to 16, **characterised in that** the solids remaining in the pre-purified treatment gas are separated in a further separating means, wherein said solids are returned to the reactor (8) via an injector.

18. Method according to one of the claims 10 to 17, **characterised in that** the treatment of the feed materials by treatment gases is a reduction method.

## Revendications

1. Dispositif pour la séparation grossière de particules de matières solides dans des gaz chargés en matières solides émis par un réacteur en vue du traitement de matières de charge sous forme de particules au moyen de gaz de traitement, comprenant une conduite d'alimentation (1) disposée verticalement ou obliquement et une dérivation (2) courbe, au moins sur un tronçon, qui peut être reliée à un dispositif de séparation destiné à la séparation de matières solides demeurées dans le gaz préalablement purifié, **caractérisé en ce que** des gaz (G) chargés en matières solides peuvent être alimentés par le biais de la conduite d'alimentation, au niveau d'un côté frontal inférieur (3), et la conduite d'alimentation est fermée au moyen d'un couvercle (4) au niveau de son côté frontal supérieur, la dérivation courbe (2) étant située sur la conduite d'alimentation (1) de telle sorte qu'une extension de conduite (5) en forme de trou borgne est formée en vue de la séparation de particules de matières solides, la courbure de la dérivation courbe (2), en forme d'arc de cercle ou d'arc constitué de segments droits, présentant un rayon de 3 à 5 fois le diamètre intérieur de la dérivation courbe (2).

2. Dispositif selon la revendication 1, **caractérisé en ce que** la position de la dérivation courbe (2) sur la conduite d'alimentation (1) est choisie de telle sorte que la longueur de l'extension de conduite (5) corresponde à la hauteur de la dérivation courbe (2).

3. Dispositif selon la revendication 1 ou 2, **caractérisé en ce que** la longueur de l'extension de conduite (5) correspond à 0,3 à 3 fois, notamment 0,5 à 1 fois, le diamètre intérieur de la conduite d'alimentation (1).

4. Dispositif selon l'une des revendications 1 à 3, **caractérisé en ce que** les diamètres intérieurs de la conduite d'alimentation (1) et de la dérivation courbe (2) sont égaux.

5. Dispositif selon l'une des revendications 1 à 4, **caractérisé en ce que** la section transversale de la conduite d'alimentation (1) et/ou celle de la dérivation courbe (2) est/sont circulaire/s, celles-ci présentant, dans la zone où l'extension en forme de trou borgne débouche dans l'arc, des portions de paroi planes qui comprennent des nervures assurant un renforcement.

6. Dispositif selon l'une des revendications 1 à 5, **caractérisé en ce que** le couvercle (4) de l'extension de conduite (5) en forme de trou borgne est pourvu d'une surface intérieure plane orientée horizontalement et/ou perpendiculairement à l'axe de la conduite d'alimentation (1) ou pourvu d'une surface convexe qui correspond à un fond torosphérique ou à une calotte sphérique ou similaire.

7. Dispositif selon l'une des revendications 1 à 6, **caractérisé en ce qu'**un raccord (6) pour l'introduction d'un courant de gaz de refroidissement dans le gaz préalablement purifié est prévu dans la dérivation pour le refroidissement du gaz préalablement purifié.

8. Dispositif selon l'une des revendications 1 à 7, **caractérisé en ce qu'**une ouverture (7) pouvant être fermée et destinée au nettoyage intérieur, notamment à l'élimination de dépôts, est prévue dans la conduite d'alimentation dans la zone de la dérivation courbe.

9. Procédé de séparation grossière de particules de matières solides dans des gaz chargés en matières solides émis par un réacteur (8) en vue du traitement de matières de charge sous forme de particules au moyen de gaz de traitement dans un dispositif selon l'une des revendications 1 à 9, **caractérisé en ce que** des gaz chargés en matières solides sont alimentés par le biais de la conduite d'alimentation (1), sur un côté frontal (3), et la conduite d'alimentation (1) est fermée au moyen d'un couvercle (4) au niveau de son autre côté frontal, la dérivation courbe (2) étant située sur la conduite d'alimentation (1) de telle sorte qu'une extension de conduite (5) en forme de trou borgne est formée en vue de la séparation de particules de matières solides, les matières solides chargées dans la conduite d'alimentation (1) étant transportées dans l'extension de conduite (5) en raison de leur inertie et étant de ce fait séparées du gaz, au moins en partie, et le gaz ainsi que les matières solides qui y demeurent étant évacué par le biais de la dérivation (2), les matières solides séparées rebondissant sur le couvercle (4) de l'extension de conduite (5) et étant projetées dans le sens du retour dans la conduite d' alimentation (1).

10. Procédé selon la revendication 9, **caractérisé en ce que** les matières solides séparées dans l'extension de conduite (5) sont à nouveau évacuées par le biais de la conduite d'alimentation (1) sous l'effet de la force de gravité.

11. Procédé selon la revendication 10, **caractérisé en ce que**, pendant l'évacuation des matières solides séparées par le biais de la conduite d'alimentation (1), la vitesse de descente des matières solides dans l'extension de conduite (5) est supérieure à la vitesse de gaz du gaz chargé en matières solides dans la conduite d'alimentation (1).

12. Procédé selon l'une des revendications 10 à 11, **caractérisé en ce qu'**un courant de gaz de refroidissement est ajouté au gaz préalablement purifié en vue d'un refroidissement.

13. Procédé selon l'une des revendications 10 à 12, **caractérisé en ce que** les matières solides demeurées dans le gaz préalablement purifié sont séparées dans un autre dispositif de séparation.

14. Procédé selon l'une des revendications 10 à 13, **caractérisé en ce que** les matières de charge sous forme de particules traitées dans le réacteur sont des fines de minerai.

15. Procédé selon l'une des revendications 10 à 14, **caractérisé en ce que** les matières de charge sous forme de particules sont traitées dans une zone de fluidisation.

16. Procédé selon l'une des revendications 10 à 15, **caractérisé en ce que** les gaz de traitement chargés en matières solides sont alimentés par le biais de la conduite d'alimentation (1), les matières solides chargées dans la conduite d'alimentation (1) sont transportées dans l'extension de conduite (5) en raison de leur inertie et sont séparées, au moins en partie, du gaz de traitement, le gaz de traitement préalablement purifié étant évacué par le biais de la dérivation (2) et les matières solides séparées dans l'extension de conduite (5) étant ramenées dans le réacteur (8) par le biais de la conduite d'alimentation (1) sous l'effet de la force de gravité.

17. Procédé selon l'une des revendications 10 à 16, **caractérisé en ce que** les matières solides demeurées dans le gaz de traitement préalablement purifié sont séparées dans un autre dispositif de séparation, ces matières solides étant ramenées dans le réacteur (8) par le biais d'un injecteur.

18. Procédé selon l'une des revendications 10 à 17, **caractérisé en ce que** le traitement des matières de charge au moyen de gaz de traitement est un procédé de réduction.
